# EUROPEAN PATENT APPLICATION

(11) **EP 4 447 194 A1**
(43) Date of publication of application: **16.10.2024**
(21) Application number: 22904343.5
(22) Date of filing: 09.12.2022
(51) Int. Cl.: H01M 10/54

(54) **STORAGE BATTERY RECYCLING DEVICE**

(30) Priority: 10.12.2021 JP 2021201051
(71) Applicant: Jera Co., Inc., Tokyo 103-6125 (JP)
(72) Inventor: OZAKI, Ryoichi, Tokyo 103-6125 (JP); MORIYAMA, Tomohiro, Tokyo 103-6125 (JP); SAKURAI, Yuta, Tokyo 103-6125 (JP); TADA, Koshi, Tokyo 103-6125 (JP); YOSHIDA, Takuji, Tokyo 103-6125 (JP); TERAKADO, Shingo, Tokyo 110-0008 (JP); UCHIDA, Kazuhito, Tokyo 110-0008 (JP); HEMMI, Masaru, Tokyo 110-0008 (JP); NAMIHIRA, Takao, Kumamoto-shi, Kumamoto 860-8555 (JP)
(74) Representative: Krauns, Christian
(86) International application number: PCT/JP2022/045557
(87) International publication number: WO 2023/106416

(57) **Abstract**

A storage battery recycling device includes a container which can store water, a sieve-like placement member provided in the container, and a discharge part configured to perform electric pulse discharge in water in the container in which water is stored, wherein the discharge part is configured to perform the electric pulse discharge a predetermined number of times on an electrode component of a storage battery placed on an upper surface of the placement member, and to separate the electrode component into a plurality of elements made of different materials.

## Description

### [Technical Field]

The present invention relates to a storage battery recycling device for extracting materials from used storage batteries.

Priority is claimed on Japanese Patent Application No. 2021-201051, filed December 10, 2021, the content of which is incorporated herein by reference.

### [Background Art]

In recent years, demand for storage batteries as power sources for electronic devices and automobiles has increased. As a consequence, an amount of recovered used waste storage batteries is also increasing. It is expected that automobiles will be electrified in the future, and as a result, it is predicted that a large amount of used storage batteries for electric vehicles will be produced. Storage batteries include metals and other materials that can be reused as resources, and there is a need for technology to efficiently recycle storage batteries. Conventionally, a recycling method for storage batteries has been to exclusively incinerate the batteries after disassembly, to smelt the residue, and to recover the extracted valuable metals. For example, Patent Document 1 describes a method of recovering valuable metals by roasting a storage battery and treating the generated roasted product.

### [Citation List]

### [Patent Document]

### [Patent Document 1]

Japanese Unexamined Patent Application, First Publication No. 2021-091940

### [Summary of Invention]

### [Technical Problem]

According to the technique described in Patent Document 1, when a storage battery is roasted, resources such as plastics are burned and resources cannot be recovered sufficiently, and there is also a problem in that a large amount of CO₂ is generated due to the combustion of fuel.

An object of the present invention is to provide a storage battery recycling device that enables storage batteries to be dismantled efficiently with a low environmental load and improves a resource recovery rate.

### [Solution to Problem]

One aspect of the present invention is a storage battery recycling device including a container which can store water, a sieve-like placement member provided in the container, and a discharge part configured to perform electric pulse discharge in water in the container in which water is stored, wherein the discharge part is configured to perform the electric pulse discharge a predetermined number of times on electrode components (or cut pieces thereof) of a storage battery placed on an upper surface of the placement member, and to separate the electrode components into a plurality of elements made of different materials.

According to the present invention, it is possible to increase the types of materials recovered and to reduce CO₂ emissions compared to conventional roasting methods by performing treatment of electrode components (or cut pieces thereof) with the discharge of electric pulses.

Further, the discharge part of the present invention may be configured to form an electrical path during discharge of the electric pulse discharge through layers of the electrode component disposed on the upper surface of the placement member.

According to the present invention, it is possible to separate materials from the electrode components using an electrical action by forming an electrical path for electric pulses in the electrode component.

According to one aspect of the present invention, the discharge part may be configured to generate a shock wave in the water by the electric pulse discharge to deform and crush the electrode component.

According to the present invention, by generating not only electric pulses but also shock waves in water, it is possible to deform and crush the electrode components and to easily separate the electrode components into materials.

Further, the storage battery of the present invention may be a lithium ion secondary battery, the electrode component may be a positive electrode component made of a plurality of materials, the positive electrode component may be configured of a thin film-like positive electrode aluminum material (a positive electrode current collector) and a layer of a positive electrode active material provided on a surface of the positive electrode aluminum material, and the discharge part may be configured to separate the positive electrode aluminum material and the positive electrode active material by the electric pulse discharge, to thereby cause the positive electrode active material to sink downward from the sieve-like placement member, while leaving the positive electrode aluminum material on the placement member.

According to the present invention, electrode components of a lithium ion secondary battery can be sorted into materials by the discharge of electric pulses.

Further, the storage battery of the present invention may be a nickel-hydride storage battery, and the discharge part may be configured to simultaneously perform the electric pulse discharge on a positive electrode component and a negative electrode component as the electrode components of the nickel-hydride storage battery.

According to the present invention, treatment by the discharge of electric pulses can be performed on electrode components of a nickel-hydride storage battery by the discharge of electric pulses.

Further, the discharge part of the present invention may be configured to separate a nickel material as a constituent of the positive electrode component, an iron material as a constituent of the a negative electrode component, a housing of the storage battery, and a separator provided between the positive electrode component and the negative electrode component from the electrode component by the electric pulse discharge.

According to the present invention, electrode components of a nickel-hydride storage battery can be sorted into materials by the discharge of electric pulses.

Further, the discharge part of the present invention may be configured to discharge an electric pulse generated by a pulse voltage of a predetermined voltage into the water a predetermined number of times set according to a degree of crushing applied to the electrode components in accordance with a solid-liquid ratio between the electrode component and the water in the container.

According to the present invention, it is possible to improve material recovery efficiency by recovering materials and setting in advance a predetermined number of times such that the materials are not crushed excessively.

Means proposed by the present invention to solve the above problems are listed below.
[1] A storage battery recycling device includes a container which can store water, a sieve-like placement member provided in the container, and a discharge part configured to perform electric pulse discharge in water in the container in which water is stored, wherein the discharge part is configured to perform the electric pulse discharge a predetermined number of times on an electrode component (or cut pieces thereof) of a storage battery placed on the placement member, and to separate the electrode component into a plurality of elements made of different materials.
[2] In the storage battery recycling device described in [1], the discharge part is configured to form an electrical path during discharge of the electric pulse discharge through layers of the electrode component disposed on the placement member.
[3] In the storage battery recycling device described in [1] or [2], the discharge part is configured to generate a shock wave into the water by the electric pulse discharge to deform and crush the electrode component.
[4] In the storage battery recycling device described in any one of [1] to [3], the storage battery is a lithium ion secondary battery, the electrode component is a positive electrode component made of a plurality of materials, the positive electrode component is configured of a thin film-like positive electrode aluminum material and a layer of a positive electrode active material provided on a surface of the positive electrode aluminum material, and the discharge part is configured to separate the positive electrode aluminum material and the positive electrode active material by the electric pulse discharge, to thereby cause the positive electrode active material to sink downward from the placement member formed in the shape of a sieve, while leaving the positive electrode aluminum material on the upper surface of the placement member.
[5] In the storage battery recycling device described in any one of [1] to [3], the storage battery is a nickel-hydride storage battery, and the discharge part is configured to simultaneously perform the electric pulse discharge on a positive electrode component and a negative electrode component as the electrode component of the nickel-hydride storage battery.
[6] In the storage battery recycling device described in [5], the discharge part is configured to separate a nickel material as a constituent of the positive electrode component, an iron material as a constituent of the negative electrode component, and a separator provided between the positive electrode component and the negative electrode component from the electrode component by the electric pulse discharge.
[7] In the storage battery recycling device described in any one of [1] to [6], the discharge part is configured to discharge an electric pulse generated by a pulse voltage of a predetermined voltage into the water at a predetermined number of times set according to a solid-liquid ratio between the electrode component and the water in the container.

### [Advantageous Effects of Invention]

According to the present invention, it is possible to disassemble a storage battery efficiently with a small environmental load, and at the same time, it is possible to improve a resource recovery rate.

### [Brief Description of Drawings]

FIG. 1 is a diagram schematically showing a configuration of a storage battery recycling device.
FIG. 2 is a diagram schematically showing a configuration of a separation device.
FIG. 3 is a diagram showing a configuration of an electrode component.
FIG. 4 is a diagram showing a configuration of a positive electrode component.
FIG. 5 is a diagram showing a configuration of a negative electrode component.
FIG. 6 is a diagram showing a configuration of a separator.
FIG. 7 is a diagram showing cut pieces of the positive electrode component.
FIG. 8 is a diagram showing cut pieces of the negative electrode component.

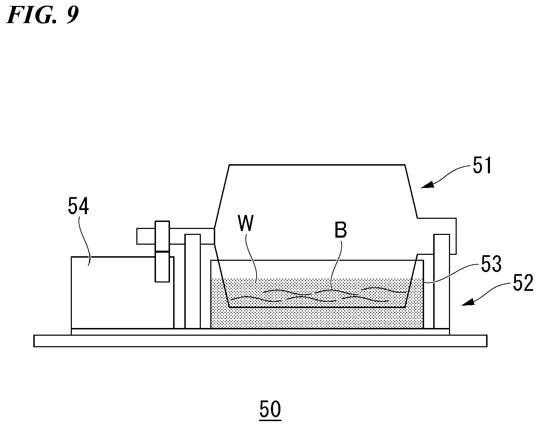

FIG. 9 is a diagram schematically showing a configuration of a water flow decomposition device.
FIG. 10 is a flowchart showing each step of a storage battery recycling method.

### [Description of Embodiments]

Hereinbelow, a storage battery recycling device according to the present invention is described with reference to the drawings.

Treatment targets of recycling are, for example, used storage batteries such as lithium ion secondary batteries and nickel-hydride storage batteries. Here, the "used storage batteries" broadly include storage batteries that have been used once, and include, for example, storage batteries that have become defective during a manufacturing process, storage batteries that are discarded due to defects or end of life of equipment used, and used storage batteries that are discarded due to end of life thereof.

The storage battery recycling device is described below.

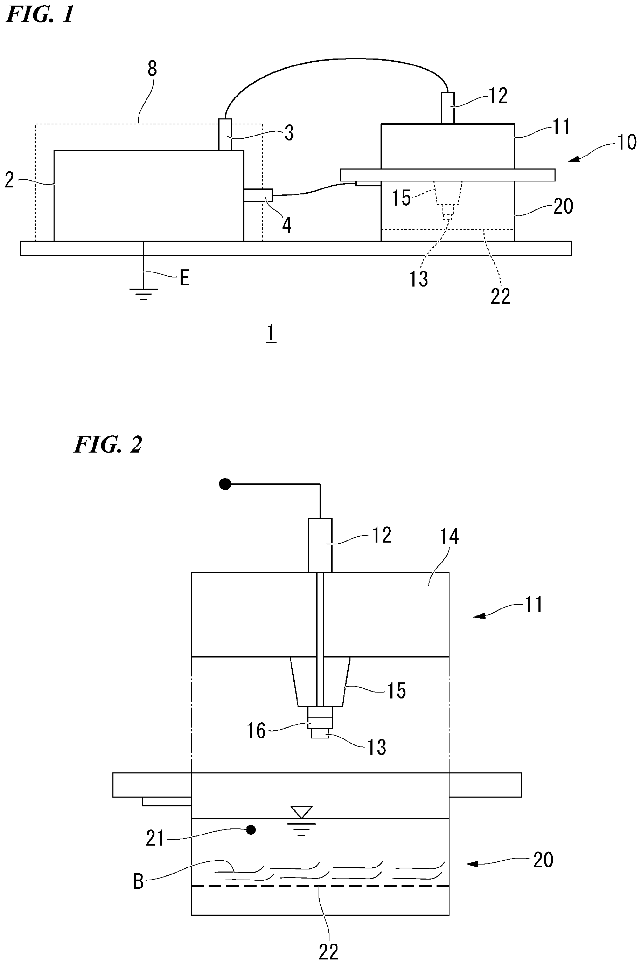

As shown in FIG. 1, a storage battery recycling device 1 includes a power supply device 2 that generates electric power, and a separation device 10 that separates components constituting a storage battery into materials (that is, separates into a plurality of elements made of different materials). The power supply device 2 outputs instantaneous high-voltage (for example, 30 to 60 kV) high power for a short period of time, such as microseconds or nanoseconds. The power supply device 2 is covered with a Faraday cage 8 that electromagnetically shields itself. The power supply device 2 includes, for example, a capacitor, stores a predetermined electric charge, and momentarily discharges the electric charge. The power supply device 2 is electrically connected to the separation device 10 via an output terminal 3 that outputs a pulse voltage. The power supply device 2 is connected to an electrical ground E that electrically connects itself to the ground side. The power supply device 2 is electrically connected to the separation device 10 via a ground terminal 4 connected to the electrical ground E.

As shown in FIG. 2, the separation device 10 includes a container 20 in which an accommodation space is formed, and a discharge part 11 that performs electric pulse discharge within the container 20. The discharge part 11 performs electric pulse discharge in water in the container 20 in which water is stored. The discharge part 11 is a conductive material having an insulation film that safely and reliably conducts electricity to the container 20 side without causing a high current to be discharged into the air. The discharge part 11 is electrically connected via an input terminal 12 to the power supply device 2 that discharges electric pulses. The input terminal 12 is electrically connected to a working electrode 13. An insulating lid part 14 is provided between the input terminal 12 and the working electrode 13. The lid part 14 is made of, for example, a resin material. A support part 15 that supports the working electrode 13 is provided on the lower surface side of the lid part 14.

The support part 15 is formed into a cone shape that protrudes downward. The support part 15 is made of an insulating material (for example, polycarbonate). The support part 15 may be made of polyethylene, ABS, vinyl chloride (hard), or the like depending on strength of the power source to be used. The support part 15 discharges a charge of pulsed power input from the input terminal 12 from the working electrode 13. A capacitance of a power storage part of the power supply device 2 is, for example, 1.6 µF. A metal washer 16 which adjusts a distance with a placement member 22 (described below) disposed below the working electrode 13 is sandwiched between the support part 15 and the working electrode 13. A distance between a tip end portion (a lower end portion) of the working electrode 13 and the placement member 22 is, for example, preferably 0.1 to 5 cm, more preferably 0.3 to 3 cm, and particularly preferably 0.5 to 2.5 cm. When this distance is within the above range, effects of the present invention can be particularly enhanced. That is, when this distance is equal to or greater than a lower limit value, energy due to the electric pulse discharge can be sufficiently transmitted to a treatment target (the electrode component of the storage battery or the cut pieces thereof), and when it is equal to or less than an upper limit value, malfunctions due to the treatment target being outside of a range affected by the electric pulse discharge can be prevented.

The discharge part 11 performs the electric pulse discharge a predetermined number of times on the cut pieces of the electrode components of the storage battery placed on the placement member 22, and separates different types of materials from the cut pieces. The discharge part 11 forms an electrical path during the electric pulse discharge through layers of the cut pieces disposed on the placement member 22 as described below. The discharge part 11 generates a shock wave in the water by discharging an electric pulse as described below, thereby deforming and crushing the cut pieces.

In this example, the treatment target is cut pieces of electrode components of a storage battery, but the treatment target is not limited to the cut pieces, and may be the entire electrode component. In particular, it is also possible to treat the entire electrode of small batteries, such as coin cells.

The container 20 is disposed below the discharge part 11. The container 20 is made of a metal material (for example, a stainless steel material). An accommodation space 21 that can store water is formed within the container 20. The inside of the accommodation space 21 is filled with water when the electric pulse discharge is performed. The placement member 22 for placing the cut pieces B is provided within the accommodation space 21. The cut pieces B are cut pieces of a disassembled storage battery. The placement member 22 is formed, for example, in a sieve-like plate shape. The placement member 22 is formed of, for example, a punched metal in which numerous through holes are formed using a metal material (for example, a stainless steel material). A diameter of the through hole is, for example, 3 mm. The cut pieces B made of a plurality of materials are placed on the placement member 22.

As a more specific example, the placement member 22 may be a metal mesh (for example, a stainless steel mesh) or expanded metal. An opening size of the metal mesh or expanded metal may be selected appropriately according to a purpose thereof, but it is preferably 1 to 50 mm, more preferably 3 to 10 mm, and particularly preferably 4 to 6 mm. When the opening size is equal to or larger than the above lower limit value, sinking of a positive electrode active material can be promoted. When the opening size is equal to or less than the above upper limit value, it is possible to reliably prevent a positive electrode aluminum material (a positive electrode current collector) from sinking downward from the placement member.

Further, a plurality of placement members 22 having different openings may be used. For example, by arranging a metal mesh with a large opening in an upper stage and a metal mesh with a small opening in a lower stage, finer sort becomes possible.

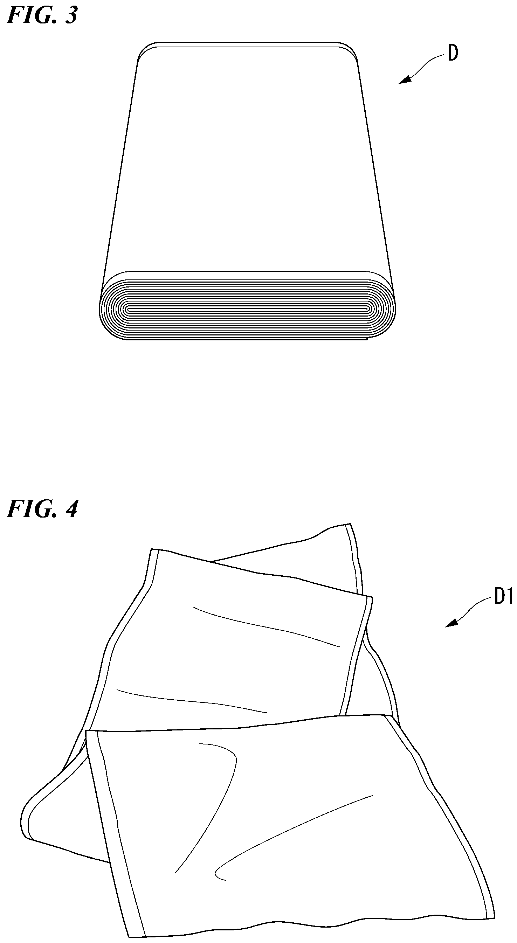

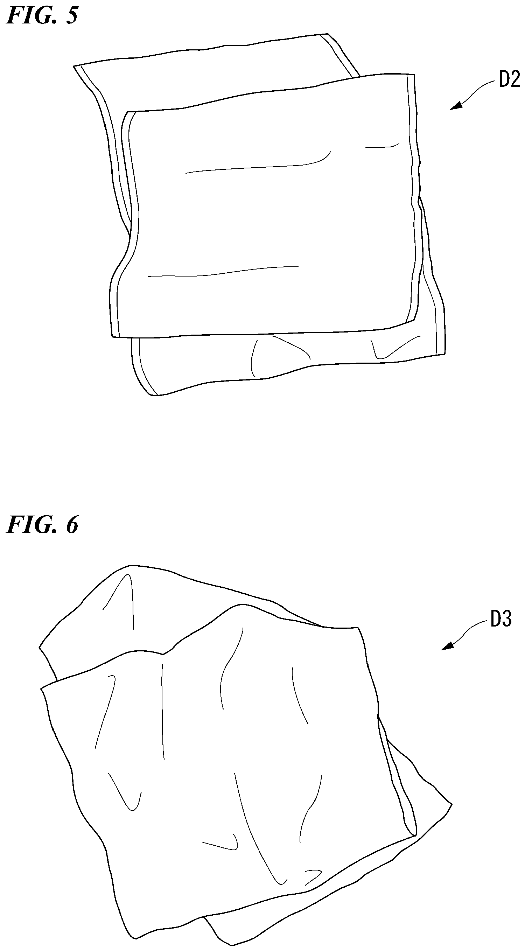

As shown in FIGS. 3 to 6, an electrode component D of a lithium ion secondary battery includes a strip-like positive electrode component D1 and a strip-like negative electrode component D2 that are wound and stored in a housing. An insulating separator D3 is provided between the positive electrode component D1 and the negative electrode component D2. For example, the electrode component is taken out by cutting the housing of the lithium ion secondary battery. The electrode component is separated from the housing. The electrode component is expanded and decomposed into the strip-like positive electrode component D1, the strip-like negative electrode component D2, and the separator D3.

The positive electrode component is made of a plurality of materials. The positive electrode component is configured of a thin film-like positive electrode aluminum material (a positive electrode current collector) and positive electrode active material layers formed on front and back surfaces of the positive electrode aluminum material. The positive electrode active material is, for example, ternary nickel cobalt lithium manganate. The positive electrode active material may be made of other materials. The negative electrode component, as in the case of the positive electrode component, is made of a plurality of materials. The negative electrode component is configured of a negative electrode copper foil material (a negative electrode current collector), negative electrode active material layers formed on front and back surfaces of the negative electrode copper foil material, and a thin film-like separator provided on a surface of the negative electrode active material layer. The negative electrode active material is carbon. The separator is, for example, a microporous membrane made of polyolefin. The negative electrode component is cut into cut pieces having predetermined dimensions using a cutting device (not shown). The cut pieces of the negative electrode component are cleaned with a cleaning solvent such as ethanol that dissolves an electrolyte, and the remaining electrolyte is removed. In addition to ethanol, other cleaning solvents such as dimethyl carbonate, acetone, methanol, supercritical solvent, liquid CO₂, or the like may be used as long as they can dissolve the electrolyte. The cleaning solvent is recovered, and components of the dissolved electrolyte through a chemical treatment are recovered. The solvent is also recycled.

The above example has been described with reference to the case in which the material of the positive electrode current collector is aluminum, but in the present invention, the material of the positive electrode current collector is not limited to aluminum.

The above example has been described with reference to the case in which the material of the negative electrode current collector is copper, but in the present invention, the material of the negative electrode current collector is not limited to copper.

The cut pieces of the positive electrode component are cleaned by a cleaning device 50. The cleaning device 50 includes, for example, a drum 51 made of a punched metal with a plurality of holes formed in a surface in a circumferential direction of a rotating shaft, a pedestal 52 that rotatably supports the drum 51, a container 53 provided between the pedestal 52 and the drum 51 and accommodating a cleaning liquid W, and a drive part 54 that rotationally drives the drum 51. In the container 53, a solvent such as ethanol which can dissolve an electrolyte is stored as the cleaning liquid W. A part of a side surface of the drum 51 in the circumferential direction is submerged below a surface of the cleaning liquid W.

The cut pieces B of the positive electrode component are disposed inside the drum 51. When the drive part 54 rotationally drives the drum 51, the cut pieces B are stirred in the cleaning liquid W in a lower portion of the drum 51 as an inner wall of the drum 51 moves, and the electrolyte adhered to the surface is removed. The cut pieces of the positive electrode component after cleaning are recovered. The cleaning liquid contains an electrolyte and is chemically treated to recover components in the electrolyte. A part of the positive electrode active material separated from the positive electrode component during cleaning accumulates at a bottom of the container 53 and is recovered as appropriate. The positive electrode components are separated into materials by the storage battery recycling device 1. The cut pieces B1 of the negative electrode component are also cleaned by the cleaning device 50.

In the negative electrode component, a bonding force between the current collector and the active material is weaker than in the positive electrode component. Therefore, when the drum 51 is rotated during cleaning, the cut pieces B1 of the negative electrode component repeat vibration and contact, and the copper foil that is the negative electrode current collector and the carbon that is the negative electrode active material are separated. The negative electrode active material is discharged to the outside of the drum 51 through the holes in the drum 51 and accumulates at the bottom of the container 53. The copper foil and the carbon are recovered from the cut pieces B1 of the negative electrode component by the cleaning device 50. The cleaning liquid contains an electrolyte and is chemically treated to recover components in the electrolyte.

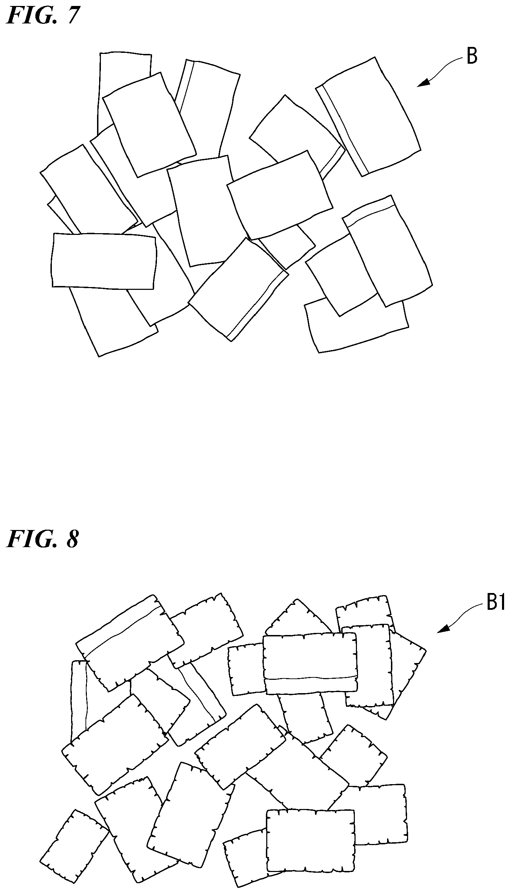

As shown in FIG. 7, the positive electrode component D1 is cut to a predetermined size, and a large number of cut pieces B are generated. The cut pieces B are placed on the placement member 22 provided in the container 20 in which water is stored. As shown in FIG. 8, the negative electrode component D2 is cut into predetermined dimensions to generate a large number of cut pieces B1. The cut pieces B1 of the negative electrode component D2 are treated by a different treatment method from that used for the cut pieces B of the positive electrode component.

Returning to FIG. 2, the cut pieces B of the positive electrode component are stacked and disposed in a plurality of layers on the placement member 22. An upper opening of the container 20 is closed by the lid part 14. After the container 20 is covered with the lid part 14, electric pulse discharge is performed a predetermined number of times in the water in the container 20 to separate different types of materials from the cut pieces. For example, a volume of water is 3L.

An inlet for feeding the cut pieces B of the positive electrode component may be provided in a side wall of the container 20.

Further, it is also possible to adopt a configuration in which the cleaning device 50 and the inlet of the storage battery recycling device 1 are connected by a transport channel such as a belt conveyor, and the cut pieces of the electrode component that have been cleaned by the cleaning device 50 are automatically fed into the storage battery recycling device 1.

The electric pulse discharged from the tip end of the working electrode 13 propagates through the water, the cut pieces B, and the placement member 22, and is discharged to the ground via the output terminal 3, the ground terminal 4, and the electrical ground E. When a voltage exceeding dielectric breakdown strength of the insulating medium (water, air) is momentarily applied between the working electrode 13 and both electrodes of the container 20 in the container 20, a momentary discharge (an electric pulse) is generated in the insulating medium within the container 20.

At this time, the cut pieces B formed of a conductor becomes an electrical path. When electricity momentarily passes through the cut pieces B, a high current flows and the cut pieces B are decomposed into different materials.

A frequency of the electric pulse to be discharged is preferably 0.5 to 10 Hz, more preferably 0.5 to 5 Hz, and particularly preferably 0.5 to 2 Hz. When this frequency is equal to or greater than a lower limit value, it is possible to shorten a treatment time, and when it is equal to or less than an upper limit value, it is possible to curb the cost of the device becoming excessive.

Further, when an electric pulse is discharged in the container 20, bubbles grow momentarily in the water within the container 20 by the electric pulse, and a shock wave propagates through the water. Since there are countless bubbles in the water, countless shock waves are generated inside the container 20. The shock wave propagated through the water acts directly on the cut pieces B that have changed due to an influence of the electric pulse, or acts indirectly by being reflected on the inner wall of the container 20. Further, the cut pieces B may be acted upon by a composite wave of the shock waves or a fused wave front resulting from a composite of an incident wave and a reflected wave of the shock wave.

In the cut pieces B, due to an electrical action of the electric pulse and the influence of shock waves in the water, different phase interfaces of a plurality of materials becomes starting points for ductile cracks and brittle cracks, and a state changes as deformation and crushing progress, and the materials forming the cut pieces B are separated. A size of the crushed pieces of each material after separation is adjusted by a voltage and the number of times of electric pulse discharges.

In the electric pulse discharge, for example, by a pulse voltage of 30 to 60 kV, an electric pulse generated at a predetermined solid-liquid ratio is discharged in water at a predetermined number of times according to the degree of crushing applied to the cut pieces. The solid-liquid ratio is a ratio of a mass of the cut pieces to a mass of water (mass of the cut piece/mass of water). The pulse voltage is adjusted as appropriate according to the solid-liquid ratio and the type of treatment target. The pulse voltage is set on the basis of experiments conducted in advance. The predetermined number of times is set on the basis of experiments conducted in advance to confirm the degree of crushing that acts on the cut pieces by the electric pulse. The predetermined number of times is appropriately set in order to prevent the cut pieces from being crushed excessively and to adjust the size of the crushed pieces generated by crushing the cut pieces in accordance with requirements imposed on individual reuse. Generally, as the solid-liquid ratio increases, the predetermined number of times increases. The predetermined number of times is, for example, 1 to 200 times, and preferably 10 to 40 times, for example, under conditions of a solid-liquid ratio of 50/100 to 1/10000 and an electric pulse discharge of 1 to 90 kV (for example, 60 kV). The solid-liquid ratio may be, for example, 50/100 to 1/10000, 30/100 to 1/1000, or 20/100 to 1/100. Further, the storage battery recycling device of the present invention may be configured to perform the electric pulse discharge under the following conditions:
(1) the pulse voltage for electric pulse discharge is preferably 1 to 90 kV, more preferably 15 to 80 kV, and particularly preferably 30 to 60 kV, and
(2) the frequency of the pulse voltage is preferably 0.5 to 10 Hz, more preferably 0.5 to 5 Hz, and particularly preferably 0.5 to 2 Hz.

The above configuration can particularly enhance the effects of the present invention.

Upon the discharge of the electric pulse discharge, an electrical path is formed between the layers of the cut pieces stacked in the plurality of layers. The positive electrode active material is uniformly detached by passing a pulsed current through the cut pieces. In addition, the shock wave generated when the electric pulse propagates through water acts on the cut pieces, separates the cut pieces into the positive electrode aluminum material and the positive electrode active material, and crushes and deforms each material into smaller pieces than the cut pieces.

The discharge part 11 separates the positive electrode aluminum material and the positive electrode active material by the electric pulse discharge to the cut pieces. By the electric pulse discharge, the discharge part 11 allows the positive electrode active material to sink downward through countless through holes formed in the placement member 22 formed in the shape of a sieve among the separated and crushed positive electrode aluminum material and positive electrode active material, and allows the positive electrode aluminum material to remain on the placement member 22. The positive electrode aluminum material and the positive electrode active material separated from the cut pieces are sorted and recovered. The water in the container 20 is also recovered, and the components of the electrolyte remaining in the cut pieces and eluted into the water are chemically treated and recovered. Regarding the negative electrode components, since the separator, the negative electrode copper foil material, and the negative electrode active material can be easily detached, separation is performed using a cleaning device described below.

According to the storage battery recycling method described above, the positive electrode active material can be recovered with a recovery rate of 95% or more. According to the storage battery recycling method, impurities such as copper and carbon can be reduced by treating only the positive electrode with the electric pulse discharge. Carbon is a repellent substance in a filtration process when cobalt and nickel are recovered by wet refining the positive electrode active material, and the amount thereof is preferably as small as possible. Similarly, copper is also a repellent substance and the amount thereof is preferably less than 0.5%. Aluminum is a repellent metal in hydrometallurgical refining (cobalt and nickel recovery) at a rear stage, and the amount thereof is preferably less than 2%. Conventional roasted recovery materials from lithium ion batteries generally contain several percent or more of aluminum.

According to the storage battery recycling device 1, impurities contained in the recovered positive electrode active material are 0% for carbon, copper, and plastic, and 0.4% or less for aluminum. According to the storage battery recycling device 1, by using electric pulse decomposition for the separation treatment of the positive electrode member, it is possible to reduce an amount of CO₂ emissions compared to the conventional roasting method. According to the storage battery recycling device 1, the treatment time can also be significantly shortened compared to the conventional method. The treatment time of the storage battery recycling device 1 can be within 1 minute, and can be applied to a recycling treatment of a large amount of waste batteries.

### [Second embodiment]

The storage battery recycling device 1 using the electric pulse discharge may be applied to recycling nickel-hydride storage batteries. In the following description, the same names and symbols are used for the same structures as in the above embodiment, and overlapping descriptions are omitted as appropriate. That is, in the following description, structures that are not particularly described are the same structures as those of the above embodiment, and functions and effects thereof are also the same.

The nickel-hydride storage battery as a treatment target has a circular or rectangular exterior, and internal electrode components may have a laminated structure or a wound structure. Some electrode components with the wound structure include single cell types. Some electrode components with the laminated structure include a plurality of cells integrated into a unit. The nickel-hydride storage batteries used in automobiles are, for example, unitized stacked storage batteries. In the future, a large quantity of unitized stacked nickel-hydride secondary batteries may potentially become used batteries. Hereinbelow, disassembly of a unitized stacked nickel-hydride secondary battery is explained.

First, the nickel-hydride storage battery as the treatment target is discharged using, for example, a discharge device capable of discharging residual power. Next, the nickel-hydride storage battery is disassembled using a disassembly device when the battery body can be disassembled using the device. The constituent parts disassembled by the disassembly device include a casing and electrode components of the nickel-hydride storage battery. The electrode components include a positive electrode component, a negative electrode component, and a separator provided between the positive electrode component and the negative electrode component.

For example, an electrode component having a laminated structure is stored in a housing in which layers of a sheet-like positive electrode component, a separator, and a negative electrode component are laminated in a plurality of layers. Therefore, the electrode components of each battery cell are punched out into rectangular cut pieces of predetermined dimensions in a stacked state by the disassembly device. For example, frames of iron housings are sorted from the punched cut pieces. Sort may be performed manually or automatically by a device such as a robot. During disassembly using the disassembly device, an electrolyte is recovered in the cleaning liquid side used when the disassembly device is cleaned.

The cut pieces of the electrode component in which the frame of the housing is sorted include a positive electrode component, a negative electrode component, and a separator. The cut pieces of the electrode component are fed into the separation device 10 that uses the electric pulse. The separation device 10 is filled with water. The cut pieces of the electrode component are decomposed by the separation device 10 using the electric pulse discharge.

By the electric pulse discharge, the discharge part 11 separates a nickel material as a constituent of the positive electrode component, an iron material as a constituent of the negative electrode component, and a separator provided between the positive electrode component and the negative electrode component from the cut pieces, and at the same time, separates the positive electrode active material adhered to the nickel material as a constituent of the positive electrode component and the negative electrode active material adhered to the iron material as a constituent of the negative electrode component. The discharge part discharges the electric pulse generated at a predetermined solid-liquid ratio by a pulse voltage of 60 kV into the water at a predetermined number of times set according to the degree of crushing acting on the cut pieces.

The disassembled electrode components are sorted using general magnetic separation. In the electrode components, the nickel material as a constituent of the positive electrode component is recovered from the cut pieces. In the electrode components, the iron material as a constituent of the negative electrode component is recovered from the cut pieces. The plastic component of the housing of the storage battery is recovered from the cut pieces. The separator provided between the positive electrode component and the negative electrode component is recovered from the cut pieces.

According to the storage battery recycling device 1, materials can be recovered from the positive electrode component and the negative electrode component of the nickel-hydride storage battery by a decomposition treatment using the electric pulse discharge at the same time, and CO₂ generation can be reduced compared to the conventional method using roasting. According to the storage battery recycling method according to the second embodiment, a working time can be significantly reduced compared to the conventional method.

### [Modified example]

For example, the storage battery recycling device 1 may perform a decomposition treatment using the electric pulse discharge on the negative electrode component of a lithium ion secondary battery. The storage battery recycling device 1 may perform a disassembly treatment using the electric pulse discharge on a mixture of cut pieces of the negative electrode component and the positive electrode component of the lithium ion secondary battery disassembled by the disassembly device. However, when the positive electrode active material is recovered by mixing the positive electrode component and the negative electrode component and performing an electric pulse decomposition treatment, a mixing rate of carbon and copper in the negative electrode active material increases compared to a case in which the positive electrode component is treated alone. Therefore, when the cut pieces are decomposed by the electric pulse discharge in this method, the recovered positive electrode active material can be used only when contamination of carbon and copper is permissible.

The discharge part 11 performs a decomposition treatment on the cut pieces by the electric pulse discharge, separates and crushes the positive electrode aluminum material (the positive electrode current collector), the positive electrode active material, the negative electrode copper foil material (the negative electrode current collector), and the negative electrode active material, causes the positive electrode active material and the negative electrode active material to sink downward through countless through holes formed in the placement member 22 formed in a sieve shape, and causes the positive electrode aluminum material and the negative electrode copper foil material to remain on the placement member 22. A plurality of materials separated from the cut pieces are sorted by type and recovered. The water in the container 20 is also recovered, and the components of the electrolyte remaining in the cut pieces and eluted into the water are chemically treated and recovered.

According to the disassembly treatment using the electric pulse discharge by the storage battery recycling device according to the modified example, since the cut pieces of the positive electrode component and the negative electrode component are simultaneously subjected to the disassembly treatment using the electric pulse discharge, the time required for the treatment is shortened.

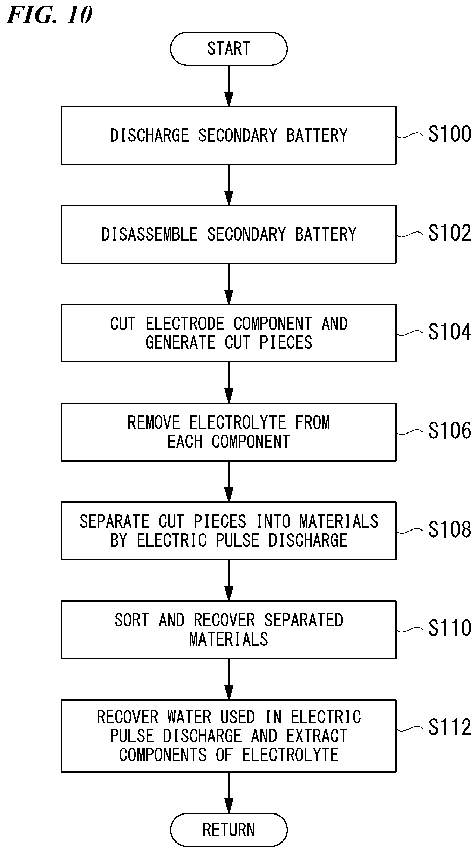

FIG. 10 shows steps of a storage battery recycling method including the above embodiment. The storage battery is discharged using a discharge device (Step S100). The storage battery is installed in the disassembly device, cut by punching, and disassembled into constituent parts (Step S102). Among the constituent parts, the electrode component is cut to generate cut pieces (Step S104). The cut pieces are cleaned to remove the electrolyte (Step S106). The cut pieces are fed into the separation device 10, subjected to a decomposition treatment using electric pulse discharge, and separated into materials (Step S 108). Each of the separated materials is sorted and recovered individually (Step S110).

A wound electrode component is unfolded and sorted into strip-like positive electrode components, as well as negative electrode components and separators. The positive electrode component is cut into cut pieces having predetermined dimensions using the cutting device (not shown). The cut pieces of the positive electrode component are cleaned with an ethanol solution to remove residual electrolyte. The positive electrode components are separated into materials by the storage battery recycling device 1. The water stored in the container 20 subjected to the electric pulse discharge is recovered, and the components of the electrolyte dissolved in the water are extracted by electrodialysis (Step S 112).

Although several embodiments of the invention have been described above, these embodiments are presented by way of examples and are not intended to limit the scope of the invention. These embodiments can be implemented in various other forms, and various omissions, substitutions, and changes can be made without departing from the gist of the invention. These embodiments and their modifications are included within the scope and gist of the invention as well as within the scope of the invention described in the claims and equivalents thereof. For example, the decomposition treatment using the electric pulse discharge in the storage battery recycling method may be applied not only to lithium ion secondary batteries and nickel-hydride storage batteries, but also to other storage batteries. Furthermore, the storage battery recycling method may be applied to recycling not only storage batteries but also primary batteries.

### [Industrial Applicability]

The storage battery recycling device of the present invention can be effectively utilized for resource recovery from used storage batteries.

### [Reference Signs List]

1 Storage battery recycling device
11 Discharge part
20 Container
22 Placement member
Voltage of 60 kV
B Cut piece
B 1 Cut piece
D1 Positive electrode component
D2 Negative electrode component
D3 Separator

## Claims

1. A storage battery recycling device comprising:
a container configured to store water;
a sieve-like placement member provided in the container; and
a discharge part configured to perform electric pulse discharge in water in the container in which water is stored,
wherein the discharge part is configured to perform the electric pulse discharge a predetermined number of times on an electrode component of a storage battery placed on an upper surface of the placement member, and to separate the electrode component into a plurality of elements made of different materials.

2. The storage battery recycling device according to claim 1, wherein the discharge part is configured to form an electrical path during discharge of the electric pulse discharge through layers of the electrode component disposed on the upper surface of the placement member.

3. The storage battery recycling device according to claim 1, wherein the discharge part is configured to generate a shock wave in the water by the electric pulse discharge to deform and crush the electrode component.

4. The storage battery recycling device according to any one of claims 1 to 3, wherein the storage battery is a lithium ion secondary battery,
the electrode component is a positive electrode component made of a plurality of materials,
the positive electrode component is configured of a thin film-like positive electrode aluminum material and a layer of a positive electrode active material provided on a surface of the positive electrode aluminum material, and
the discharge part is configured to separate the positive electrode aluminum material and the positive electrode active material by the electric pulse discharge, to thereby cause the positive electrode active material to sink downward from the sieve-like placement member, while leaving the positive electrode aluminum material on the upper surface of the placement member.

5. The storage battery recycling device according to any one of claims 1 to 3, wherein the storage battery is a nickel-hydride storage battery, and
the discharge part is configured to simultaneously perform the electric pulse discharge on each of a positive electrode component and a negative electrode component as the electrode component of the nickel-hydride storage battery.

6. The storage battery recycling device according to claim 5, wherein the discharge part is configured to separate a nickel material as a constituent of the positive electrode component, an iron material as a constituent of the negative electrode component, and a separator provided between the positive electrode component and the negative electrode component from the electrode component by the electric pulse discharge.

7. The storage battery recycling device according to any one of claims 1 to 6, wherein the discharge part is configured to discharge an electric pulse generated by a pulse voltage of a predetermined voltage into the water a predetermined number of times set according to a solid-liquid ratio between the electrode component and the water in the container.
